# EUROPEAN PATENT APPLICATION

(11) **EP 4 848 427 A1**
(43) Date of publication of application: **02.12.2026**
(21) Application number: 24909351.9
(22) Date of filing: 25.01.2024
(51) Int. Cl.: H01M 50/209, H01M 10/613, H01M 10/6568

(54) **IMMERSION COOLING DEVICE AND BATTERY PACK**

(30) Priority: 29.12.2023 CN 202323667097 U
(71) Applicant: Eve Energy Co., Ltd., Huizhou, Guangdong 516006 (CN)
(72) Inventor: ZHUO, Wei, Huizhou, Guangdong 516006 (CN); ZHU, Yuan, Huizhou, Guangdong 516006 (CN); YI, Haohao, Huizhou, Guangdong 516006 (CN); LIU, Jianbo, Huizhou, Guangdong 516006 (CN)
(74) Representative: Berggren Oy
(86) International application number: PCT/CN2024/074024
(87) International publication number: WO 2025/138379

(57) **Abstract**

An immersed cooling device and a battery pack are provided. The immersed cooling device includes a cooling pipe including two end portions arranged opposite to each other in a first direction and a body portion located between the two end portions, one end portion being provided with an inlet, and a side wall of the body portion being provided with a plurality of outlets arranged at intervals; and two support assemblies respectively supporting the two end portions of the cooling pipe. The two support assemblies and the cooling pipe are configured to jointly enclose a cooling region with two battery modules located on two opposite sides of the two support assemblies, and the cooling region is in communication with the plurality of outlets.

## Description

This application claims priority to Chinese Patent Application No. 202323667097.5 filed with China National Intellectual Property Administration on December 29, 2023, the entire contents of which are incorporated herein by reference.

### TECHNICAL FIELD

The present application relates to the field of battery technologies, and in particular, to an immersed cooling device and a battery pack.

### BACKGROUND

In the related art, a plurality of parallel battery modules are arranged in the battery pack, due to the limitation of space arrangement and other reasons, the plurality of battery modules are closely arranged, the heat dissipation conditions are poor, and the temperature between two battery modules will be gradually increased, resulting in the accumulation of heat in the battery pack and the increase of temperature, which in turn affects the performance and service life of the battery pack, and even causes thermal runaway.

### SUMMARY

The present application provides an immersed cooling device and a battery pack to solve the above technical problems.

According to a first aspect, the present application provides an immersed cooling device, including:
a cooling pipe including two end portions arranged opposite to each other in a first direction and a body portion located between the two end portions, where one of the end portions is provided with an inlet, and a side wall of the body portion is provided with a plurality of outlets spaced apart; and
two support assemblies respectively supporting the two end portions of the cooling pipe;
where the two support assemblies and the cooling pipe are configured to enclose a cooling region together with two battery modules located on two opposite sides of the two support assemblies, and the cooling region is in communication with the plurality of outlets.

According to a second aspect, the present application further provides a battery pack, including:
a housing provided with an accommodating cavity;
a plurality of battery modules spaced apart in the accommodating cavity; and
a plurality of immersed cooling devices, wherein each of the immersed cooling devices is correspondingly disposed between two adjacent ones of the battery modules;
where each of the immersed cooling devices is the immersed cooling device described above.

### BENEFICIAL EFFECTS

The present application has the following beneficial effects: the immersed cooling device provided by the present application has a simple structure and can be in direct contact with the side surfaces of a plurality of battery modules in the battery pack for cooling, so as to prevent the temperature of the battery pack from increasing due to excessive temperature between the battery modules and thermal runaway, thereby improving the service life and safety of the battery pack. Specifically, the two support assemblies and the cooling pipe are arranged to jointly form a cooling region with the two battery modules located on two opposite sides of the two support assemblies. In this way, the cooling medium enters the cooling pipe from the inlet, and then flows into the cooling region from the outlets of the cooling pipe. Since the adjacent side walls of the two battery modules form the cooling region, the cooling medium flows between the two adjacent battery modules and is in direct contact with the battery modules to directly cool the two battery modules, which ensures the uniformity of the temperature of the entire battery pack and further improves the safety of the battery pack.

### BRIEF DESCRIPTION OF THE DRAWINGS

FIG. 1 is a schematic view of a structure of an immersed cooling device according to an embodiment of the present application.
FIG. 2 is a schematic view of a structure of a cooling pipe (including a sealing member) in FIG. 1.
FIG. 3 is a schematic view of a structure of a support assembly in FIG. 1.
FIG. 4 is an enlarged view of section A in FIG. 1.
FIG. 5 is an enlarged view of section B in FIG. 2.

### Reference numerals:

100, immersed cooling device; 101, cooling pipe; 102, end portion; 103, cooling region; 104, body portion; 105, inlet; 106, outlet; 107, support assembly; 108, support plate; 109, blocking member; 110, limiting port; 111, clamping groove; 112, support groove; 113, fixing assembly; 114, fixing plate; 115, limiting plate; 116, support portion; 117, sealing member; 118, pipeline joint structure.

### DETAILED DESCRIPTION

In the description of the present application, unless otherwise expressly defined and defined, the terms "link", "connect", "fix" are to be understood in a broad sense, for example, as a fixed connection, as a detachable connection, or as a whole; may be as a mechanical connection or an electrical connection; may be as a directly connection or indirectly connection by means of an intermediate medium; may be as internal communication of the two elements or interaction of the two elements. For those of ordinary skilled in the art, the specific meanings of the above terms in the present application may be understood based on specific circumstances.

In the present application, unless otherwise expressly defined and specified, the phrases, such as a first feature "above" or "below" a second feature, mean the first feature in direct contact with the second feature, or the first feature in indirect contact with the second feature by other feature(s) therebetween. Moreover, when the first feature is described as "on", "above" or "over" the second feature, the first feature is right on, above or over the second feature or the first feature is obliquely on, above or over the second feature, or the first feature is at a horizontally higher level than the second feature. When the first feature is described as "under", "below" or "underneath" the second feature, the first feature is right under, below or underneath the second feature or the first feature is obliquely under, below or underneath the second feature, or the first feature is at a horizontally lower level than the second feature.

In the description of this embodiment, the terms "upper", "lower", "right", etc., are based on the directions or positions shown in the drawings, and are only for the convenience of description and simplification of operation, rather than indicating or implying that the device or element referred to must have a specific direction, be constructed and operated in a specific direction, and therefore cannot be understood as limiting the present application. In addition, the terms "first" and "second" are only used for descriptive purposes and have no special meaning.

In the related art, a plurality of parallel battery modules are arranged in the battery pack, due to the limitation of space arrangement and other reasons, the plurality of battery modules are closely arranged, the heat dissipation conditions are poor, and the temperature between two battery modules will be gradually increased, resulting in the accumulation of heat in the battery pack and the increase of temperature, which in turn affects the performance and service life of the battery pack, and even causes thermal runaway.

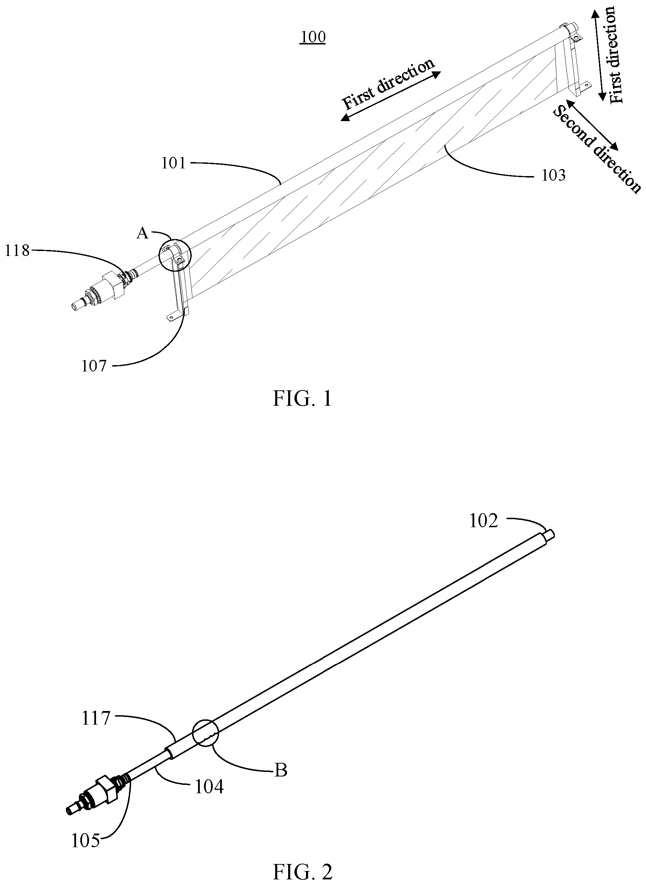

In view of this, the present application provides an immersed cooling device 100, FIG. 1 to FIG. 5 are schematic views of structure of the immersed cooling device 100 according to some embodiments of the present application, and the immersed cooling device 100 provided by the present application has a simple structure, can directly cool battery modules, and has high cooling efficiency. The immersed cooling device 100 are described in detail below with reference to the accompanying drawings.

Referring to FIG. 1, FIG. 2, and FIG. 5, the immersed cooling device 100 includes a cooling pipe 101 and two support assemblies 107. The cooling pipe 101 includes two end portions 102 arranged opposite to each other in a first direction and a body portion 104 located between the two end portions 102. One of the end portions 102 is formed with an inlet 105, and a side wall of the body portion 104 is formed with a plurality of outlets 106 arranged at intervals. The two support assemblies 107 respectively support the two end portions 102 of the cooling pipe 101. The two support assemblies 107 and the cooling pipe 101 are configured to jointly form a cooling region 103 with two battery modules located on two opposite sides of the two support assemblies 107, and the cooling region 103 is in communication with the plurality of outlets 106.

In the technical solution of the present application, the immersed cooling device 100 has a simple structure and can be in direct contact with a plurality of battery modules in the battery pack for cooling, so as to prevent the temperature of the battery pack from increasing due to excessive temperature between the battery modules and thermal runaway, thereby improving the service life and safety of the battery pack. Specifically, the two support assemblies 107 and the cooling pipe 101 are arranged to jointly form a cooling region 103 with the two battery modules located on two opposite sides of the two support assemblies 107. In this way, the cooling medium enters the cooling pipe 101 from the inlet 105, and then flows into the cooling region 103 from the outlets 106 of the cooling pipe 101. Since the adjacent side walls of the two battery modules form the cooling region 103, the cooling medium flows between the two adjacent battery modules and is in direct contact with the battery modules to directly cool the two battery modules, which ensures the uniformity of the temperature of the entire battery pack and further improves the safety of the battery pack.

Specifically, the immersed cooling device 100 has a simple structure and no additional cooling plate. In actual operation, the two battery modules are spaced apart to form a first space, the immersed cooling pipe 101 is mounted in the first space, the two support assemblies 107 block two ends of the first space, and the cooling pipe 101 blocks the upper part of the first space to form the cooling region 103. In the actual mounting process, only the two support assemblies 107 need to be fixed first, and then the two end portions 102 of the cooling pipe 101 are respectively fixed to the two support assemblies 107. Thus, the mounting steps are few, the structure is simple, and excellent mounting advantages are achieved.

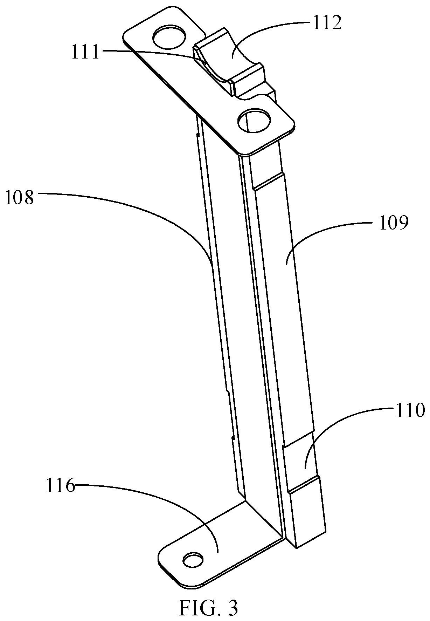

It should be noted that, to ensure the sealing performance of the cooling region 103 and avoid leakage of the cooling medium in the cooling region 103, the support assembly 107 needs to ensure the sealing performance while supporting. Specifically, referring to FIG. 3, the cooling region 103 has two first side surfaces arranged opposite to each other in the first direction, two second side surfaces arranged opposite to each other in the second direction, and two third side surfaces arranged opposite to each other in the third direction. Two adjacent battery modules constitute the two second side surfaces of the cooling region 103. In the embodiments, each of the support assemblies 107 includes a support plate 108 and a blocking member 109, the blocking member 109 is mounted at a side of the support assembly 107 close to the cooling region 103, and the two blocking members 109 constitute the two first side surfaces of the cooling region 103. More specifically, the blocking member 109 is configured to mount the corresponding battery module. The two blocking members 109 and the two battery modules, block the two first side surfaces and the two second side surfaces of the cooling region 103. The blocking member 109 cooperates with the battery module to seal part of the cooling region 103 (i.e., the two first side surfaces and the two second side surfaces). With such a configuration, by using the side surfaces of the battery modules to form the two first side surfaces of the cooling region 103, there is no need to additionally arrange structures such as cooling plates, which reduces the weight and cost of the battery pack.

Further, in some embodiments, the blocking member 109 is preferably a foam, which has good sealing property and light weight. In addition, it is corrosion-resistant and low in cost. Therefore, using the foam as the blocking member 109 not only ensures sealing property but also reduces costs.

Further, the foam is relatively soft, after the cooling medium in the cooling region 103 exchanges heat, the temperature of the cooling medium will increase. When the temperature is too high, the foam will deform. In the embodiments, the support plate 108 supports the corresponding end portion 102 of the cooling pipe 101. Further, the blocking member 109 is disposed at the side of the support plate 108 close to the cooling region 103, and the blocking member 109 closely abuts against the support plate 108, so that the support plate 108 can also support the blocking member 109 while supporting the cooling pipe 101, thereby preventing the blocking member 109 from deforming due to too high temperature and separating from the battery module.

Further, referring to FIG. 1 and FIG. 3, two sides of the blocking member 109 are provided with a plurality of limiting ports 110, the battery module is provided with a plurality of protrusions corresponding to the limiting ports 110, and the plurality of limiting ports 110 cooperate with the plurality of protrusions, so that the blocking member 109 is relatively fixed to the battery module.

To prevent the operator from misaligning when installing the blocking member 109, which would result in the inability of the cooling region 103 to form a sealed space, in some embodiments, the blocking member 109 is provided with an anti-misalignment mechanism. Specifically, in the plurality of limiting ports 110 on the same side of the blocking member 109, distances between every two adjacent limiting ports 110 are different. For example, in an embodiment, the blocking member 109 is provided with six limiting ports 110, the six limiting ports 110 are evenly distributed on both sides of the blocking member 109 (that is, each side is provided with three limiting ports 110), and the three limiting ports 110 are a first limiting port, a second limiting port, and a third limiting port in sequence. The distance from the first limiting port to the second limiting port is set as L1, the distance from the second limiting port to the third limiting port is set as L2, and L1 and L2 are set to be different, so that the anti-misalignment function can be realized. In another embodiment, the blocking member 109 is provided with six limiting ports 110, each side is provided with three limiting ports 110, the limiting ports 110 on one side are a first limiting port, a second limiting port, and a third limiting port in sequence, and the limiting ports 110 on the other side are a fourth limiting port, a fifth limiting port, and a sixth limiting port. The first limiting port corresponds to the fourth limiting port, the second limiting port corresponds to the fifth limiting port, and the third limiting port corresponds to the sixth limiting port. The distance from the first limiting port to the second limiting port is L1, the distance from the second limiting port to the third limiting port is L2, the distance from the fourth limiting port to the fifth limiting port is L3, and the distance from the fifth limiting port to the sixth limiting port is L4, where L1, L2, L3, and L4 are all different, so that the anti-misalignment function can be realized.

In some other embodiments, referring to FIG. 3, the blocking member 109 is provided with four limiting ports 110, each side is provided with two limiting ports 110, and the distances from each limiting port 110 to the corresponding end portion 102 are different, so that the operator can only install in the corresponding direction when installing, otherwise, the limiting ports 110 cannot cooperate with the protrusions, thereby achieving the anti-misalignment function.

Referring to FIG. 3, one end of the support plate 108 is provided with a clamping groove 111, and the clamping groove 111 is configured to clamp the cooling pipe 101. One end of the blocking member 109 close to the clamping groove 111 is provided with a support groove 112, and the support groove 112 is configured to support the cooling pipe 101. The clamping groove 111 and the support groove 112 cooperate with each other to pre-fix the end portion 102 of the cooling pipe 101 on the support assembly 107.

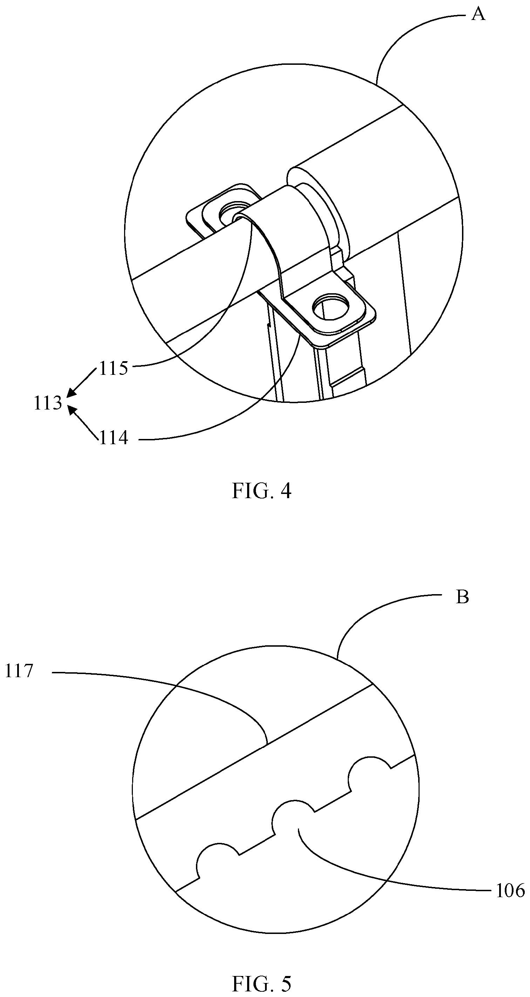

Referring to FIG. 1, FIG. 3, and FIG. 4, the battery pack will shake during use, in order to prevent the cooling pipe 101 from disengaging, each of the support assemblies 107 further includes a fixing assembly 113, and the fixing assembly 113 is configured to fix the end portion 102 of the cooling pipe 101. Specifically, in some embodiments, referring to FIG. 4, the fixing assembly 113 includes a fixing plate 114 and a limiting plate 115, the fixing plate 114 is mounted on the support plate 108 and is disposed close to the clamping groove 111. Specifically, the fixing plate 114 is disposed below the clamping groove 111, the fixing plate 114 is a planar plate and cannot fix the cooling pipe 101 by contact with the cooling pipe 101. The fixing plate 114 is disposed below the clamping groove 111, and the clamping groove 111 can play a fixing role, to pre-fix the cooling pipe 101. The limiting plate 115 is formed with a groove, the groove is disposed toward the fixing plate 114, the limiting plate 115 cooperates with the fixing plate 114 to form a fixing hole, and the cooling pipe 101 extends through and is fixed in the fixing hole. More specifically, two first through holes are defined by the fixing plate 114, two second through holes corresponding to the two first through holes are defined by the limiting plate 115, and the two first through holes correspond to the two second through holes. The fixing assembly 113 further includes a first bolt and a nut, and the first bolt sequentially extends through the first through hole and the second through hole, and cooperates with the nut to fix the fixing plate 114 and the limiting plate 115, thereby fixing the end portion 102 of the cooling pipe 101 on the support plate 108.

Referring to FIG. 3, in order to facilitate the fixing of the support plate 108, one end of the support plate 108 away from the cooling pipe 101 is bent in a direction away from the cooling region 103 to form a support portion 116, and the support portion 116 is configured to be fixed to the housing of the battery pack. More specifically, a third via hole is defined by the support portion 116, the fixing assembly 113 includes a second bolt, and the second bolt extends through the third via hole to be fixed to the housing of the battery pack, so that the immersed cooling device 100 can be fixed to the battery pack.

Specifically, referring to FIG. 1 and FIG. 2, the immersed cooling device 100 further includes a sealing member 117, and the sealing member 117 is wrapped around the outer side of the body portion 104 to seal at least a part of the cooling region 103. In the embodiments, the sealing member 117 is configured to block one third side surface of the two third side surfaces of the cooling region 103, and the other third side surface is blocked by the bottom of the housing of the battery pack, so that the six side surfaces of the cooling region 103 are all blocked, and the cooling region 103 forms a sealed space to prevent the cooling medium in the cooling region 103 from leaking out.

Further, still referring to FIG. 1, the immersed cooling device 100 further includes a pipeline joint structure 118, and the pipeline joint structure 118 is connected to the inlet 105. The pipeline joint structure 118 includes a connection section, a body section and a threaded section. The body section is connected between the connection section and the threaded section, the threaded section is connected to the inlet 105, the connection section is connected to the outside and is configured to guide the cooling medium into the cooling pipe 101. Further, the connection section, the body section, and the threaded section are integrally formed, and the material of the pipeline joint structure 118 is selected as PA66.

In some embodiments, the inner diameter of the body portion 104 is 10 mm to 15 mm, specifically, the inner diameter of the body portion 104 may be 10 mm, 10.5 mm, 11 mm, 11.5 mm, 12 mm, 12.5 mm, 13 mm, 13.5 mm, 14 mm, 14.5 mm, or 15 mm. The wall thickness of the body portion 104 is 1 mm to 1.25 mm, specifically, the wall thickness of the body portion 104 may be 1.00 mm, 1.10 mm, 1.11 mm, 1.12 mm, 1.13 mm, 1.14 mm, 1.15 mm, 1.16 mm, 1.17 mm, 1.18 mm, 1.19 mm, 1.20 mm, 1.21 mm, 1.22 mm, 1.23 mm, 1.24 mm, or 1.25 mm. The material of the cooling pipe 101 is selected as PA12, which has good thermal conductivity, light mass, and low cost.

In some embodiments, the number of the inlet 105 is configured to be 1, and the number of the outlets 106 is configured to be 13. The arrangement of the plurality of outlets 106 can accelerate the circulation of the cooling medium in the cooling region 103, accelerate the cooling speed, and avoid the situation that the local temperature of the battery module is too high. Further, the flow rate of the cooling medium in the cooling pipe 101 is 20 L/min.

The present application further provides a battery pack, the battery pack includes a housing, a plurality of battery modules, and a plurality of immersed cooling devices 100. The housing forms an accommodating cavity. The plurality of battery modules are arranged in the accommodating cavity at intervals, and each of the immersed cooling devices 100 is correspondingly arranged between two adjacent battery modules. The specific structure of the immersed cooling device 100 refers to the above embodiments, and since the battery pack adopts all the technical solutions of all the above embodiments, it has at least all the beneficial effects brought by the technical solutions of the above embodiments, which will not be repeated here.

Further, the side walls of the two adjacent battery modules, the bottom of the housing, the cooling pipe 101, and the two support assemblies 107 together enclose the cooling region 103. The side walls of the two adjacent battery modules constitute the two second side surfaces of the cooling region 103, the bottom of the housing and the cooling pipe 101 constitute the two third side surfaces of the cooling region 103, and the two support assemblies 107 constitute the two second side surfaces of the cooling region 103.

Further, at least one water outlet is formed at the bottom of the housing at a position corresponding to the cooling pipe 101, the water outlet is in communication with the cooling region 103, and after heat exchange of the cooling medium in the cooling region 103 is completed, the cooling medium flows out of the cooling region 103 from the water outlet.

## Claims

1. An immersed cooling device (100), comprising:
a cooling pipe (101) comprising two end portions (102) arranged opposite to each other in a first direction and a body portion (104) located between the two end portions (102), wherein one of the end portions (102) is provided with an inlet (105), and a side wall of the body portion (104) is provided with a plurality of outlets (106) spaced apart; and
two support assemblies (107) respectively supporting the two end portions (102) of the cooling pipe (101);
wherein the two support assemblies (107) and the cooling pipe (101) are configured to enclose a cooling region (103) together with two battery modules located on two opposite sides of the two support assemblies (107), and the cooling region (103) is in communication with the plurality of outlets (106).

2. The immersed cooling device (100) of claim 1, wherein each of the support assemblies (107) comprises a support plate (108) and a blocking member (109), the blocking member (109) is mounted at a side of the support assembly (107) close to the cooling region (103), the support plate (108) supports a corresponding one of the end portions (102) of the cooling pipe (101), and the blocking member (109) is configured to mount a corresponding one of the battery modules and seal at least a part of the cooling region (103).

3. The immersed cooling device (100) of claim 2, wherein each of both sides of the blocking member (109) is provided with a plurality of limiting ports (110), and the plurality of limiting ports (110) are configured to limit a plurality of protrusions of the corresponding one of the battery modules.

4. The immersed cooling device (100) of claim 3, wherein distances between every two adjacent ones of the limiting ports (110) of the same side of the blocking member (109) are different.

5. The immersed cooling device (100) of any one of claims 2 to 4, wherein the blocking member (109) comprises foam.

6. The immersed cooling device (100) of any one of claims 2 to 4, wherein an end of the support plate (108) is provided with a clamping groove (111), and the clamping groove (111) is configured to clamp the cooling pipe (101); and
an end of the blocking member (109) close to the clamping groove (111) is provided with a support groove (112), and the support groove (112) is configured to support the cooling pipe (101).

7. The immersed cooling device (100) of claim 5, wherein each of the support assemblies (107) further comprises a fixing assembly (113), the fixing assembly (113) comprises a fixing plate (114) and a limiting plate (115), the fixing plate (114) is mounted on the support plate (108) and arranged close to the clamping groove (111), the limiting plate (115) cooperates with the fixing plate (114) to enclose a fixing hole, and the cooling pipe (101) extends through and is secured to the fixing hole.

8. The immersed cooling device (100) of any one of claims 2 to 4, wherein an end of the support plate (108) away from the cooling pipe (101) is in a bent configuration away from the cooling region (103) to form a support portion (116).

9. The immersed cooling device (100) of claim 8, wherein the support portion (116) is provided with a third via hole, the support assembly further comprises a second bolt, and the second bolt extends through the third via hole and is configured to be fixed to the housing of the battery pack.

10. The immersed cooling device (100) of any one of claims 1 to 4, further comprising a sealing member (117) wrapped around an outer side of the body portion (104) to seal at least a part of the cooling region (103); and/or
an inner diameter of the body portion (104) is 10 mm to 15 mm, and a wall thickness of the body portion (104) is 1 mm to 1.25 mm.

11. The immersed cooling device (100) of any one of claims 1 to 4, further comprising a pipeline joint structure (118), wherein the pipeline joint structure (118) is in a threaded connection with the cooling pipe (101).

12. A battery pack, comprising:
a housing formed with an accommodating cavity;
a plurality of battery modules spaced apart in the accommodating cavity; and
a plurality of immersed cooling devices (100), wherein each of the immersed cooling devices (100) is correspondingly disposed between two adjacent ones of the battery modules;
wherein the immersed cooling device (100) is the immersed cooling device (100) as claimed in any one of claims 1 to 11.

13. The battery pack of claim 12, wherein two side walls of two adjacent ones of the battery modules, a bottom of the housing, the cooling pipe (101) and the two support assemblies (107) together enclose the cooling region (103); and/or
a position corresponding to the cooling pipe (101) at the bottom of the housing is provided with at least one water outlet, and the water outlet is in communication with the cooling region (103).
